# EUROPEAN PATENT APPLICATION

(11) **EP 1 568 402 A1**
(43) Date of publication of application: **31.08.2005**
(21) Application number: 03748668.5
(22) Date of filing: 02.10.2003
(51) Int. Cl.: A63F 13/10

(54) **GAME SYSTEM**

(30) Priority: 31.10.2002 JP 2002318960
(71) Applicant: Konami Corporation, Tokyo 100-6330 (JP)
(72) Inventor: ISHIKAWA, Hirotaka, c/o Konami Comp.E. Tokyo, Inc., Chuo-ku, Tokyo 104-6041 (JP)
(74) Representative: Winter, Brandl,&Fürniss, Hübner Röss, Kaiser, Polte Partnerschaft Patent- und Rechtsanwaltskanzlei
(86) International application number: PCT/JP2003/012633
(87) International publication number: WO 2004/039467

(57) **Abstract**

In order to provide a game system capable of directly enhancing an incentive to play a game a lot, in a game system, a first game device (1) accommodates a portable storage medium, generates information relating to an amount a player plays, and writes game parameters for information relating to the play amount to the portable storage medium. A second game device (2) also accommodates the portable storage medium, reads game parameters stored on the accommodated storage medium, and carries out prescribed game processing based on the read-out game parameters.

## Description

### TECHNICAL FIELD

The present invention relates to a game system, game device, game providing method, and program for causing first and second game devices to cooperate with each other.

### BACKGROUND ART

In recent years, as household games have become more sophisticated, the number of players that enjoy playing games provided by commercial game devices located at game centers for commercial use and also play games having the same content at home has been increasing. This kind of game player on the one hand enjoys games using a commercial game device at a game center, while also enjoying a game of the same title on a household game device at home.

However, data exchange carried out between the aforementioned conventional commercial game device and household game device is no more than exchanging data of play context, and it is not possible to immediately confer an incentive with regards to the amount a game is played.

The present invention sets out to resolve the aforementioned situation, and brings about the advantage of providing a game system capable of enabling exchange of game parameters for information relating to a play amount for a player occurring in two game devices such as a commercial game device and a household game device etc. so as to enhance the incentive to play the game a lot.

### DISCLOSURE OF THE INVENTION

In order to resolve the problems of the aforementioned related example, a game system of the present invention comprises a first game device, and a second game device separate from the first game device, wherein the first game device comprises: medium accommodating means for accommodating a portable computer-readable storage medium, and writing means for generating information relating to a play amount for a player, and writing game parameter(s) for information relating to the play amount to the portable storage medium, and the second game device comprises: medium accommodating means for accommodating the portable storage medium, and game processing means for reading game parameter(s) stored on the accommodated portable storage medium and processing prescribed game event(s) based on the read game parameter(s).

It is therefore possible to enhance an incentive to play a game a lot by enabling exchange of parameter for information relating to play amount between a separate first game device and second game device. This prescribed game event may be an event of the game events appearing in the game processing, where appearance is limited, but limitations on appearance are released based on parameters read out at the second game device, or may be a game event that does not occur at the second game device solely, realized using game parameter (s) supplied by the first game device and read out by the second device, that achieve a condition of appearance, which is simply referred as "special event" below.

Information relating to play amount may be information containing at least one of a fee paid by the player for playing at the first game device, a number of times a player has played at the first game device, and time a player has played for at the first game device. This enables the play amount to be known.

Further, the game parameter(s) may also contain at least one of whether or not occurrence of the prescribed game event is possible, data utilized during the occurrence of the prescribed game event, and the second game device may implement processing to generate the prescribed game event based on this/these game parameter(s).

In this case, it is also possible for at least one of the first game device and the second game device to decide whether or not to generate the prescribed game event based on a random number. Further, it is also preferable to provide record writing means, when at least one of the first game device or the second game device generates the prescribed game event, and writing a record of the occurrence containing information for identifying the prescribed game event to the portable storage medium, wherein, when there is a record of the occurrence, processing is carried out to limit generation of the prescribed game event identified in information contained in the record of the occurrence. By doing this, the game is improved, and the incentive to play the game a lot is increased.

In order to resolve the aforementioned problems of the related example, there is provided a second game device capable of cooperation with a first game device including means for generating information relating to a play amount of a player and writing game parameter(s) for information relating to the play amount in a portable storage medium, comprising: medium accommodating means for accommodating the portable storage medium; and game processing means for reading game parameter(s) stored on the accommodated portable storage medium and processing prescribed game events based on the read game parameter(s). It is therefore possible to enhance an incentive to play a game a lot by enabling exchange of parameter(s) for information relating to play amount between a separate first game device and second game device.

In order to resolve the problems with the aforementioned related example, a first game device comprises medium accommodating means for accommodating a portable storage medium, and writing means for generating information relating to a play amount for a player, and writing game parameter (s) for information relating to the play amount to the portable storage medium.

Further, according to a first aspect of the present invention, a game providing method employing a first game device and a second game device comprises the steps of at the first game device, generating information relating to a play amount for a player, and writing game parameter(s) for information relating to the play amount to a portable storage medium, and at the second game device, reading game parameter(s) stored on the accommodated portable storage medium and processing prescribed game events based on the read game parameter(s). It is therefore possible to enhance an incentive to play a game a lot by enabling exchange of parameter (s) for information relating to play amount between a separate first game device and second game device.

According to a further aspect of the present invention, a program product is capable of executing, on a computer built-into a second game device capable of cooperation with a first game device including means for generating information relating to a play amount of a player and writing game parameter(s) for information relating to the play amount in a portable storage medium, steps of: reading out game parameter(s) stored on the portable storage medium; and processing prescribed game events based on the read-out game parameter(s).

In a still further aspect of the present invention, a program product is capable of executing steps of generating information relating to a play amount for a player and writing game parameter (s) for information relating to the play amount on the portable storage medium.

In a still further aspect of the present invention, a program capable of executing, on a computer built-into a second game device capable of cooperation with a first game device including means for generating information relating to a play amount of a player and writing game parameter (s) for information relating to the play amount in a portable storage medium, steps of reading out game parameter (s) stored on the portable storage medium and processing prescribed game events based on the read-out game parameter(s) is stored on a computer-readable storage medium.

In a still further aspect of the present invention, a program for executing steps of generating information relating to a play amount for a player and writing game parameter(s) for information relating to the play amount on a portable storage medium on a computer is stored on a computer-readable storage medium.

### BRIEF DESCRIPTION OF THE DRAWINGS

FIG. 1 is a block view of the structure of a game system of one embodiment of the present invention.
FIG. 2 is a block view showing functions of a first game device of the embodiment of the present invention.
FIG. 3 is a block view showing functions of a second game device of the embodiment of the present invention.

### BEST MODE FOR CARRYING OUT THE INVENTION

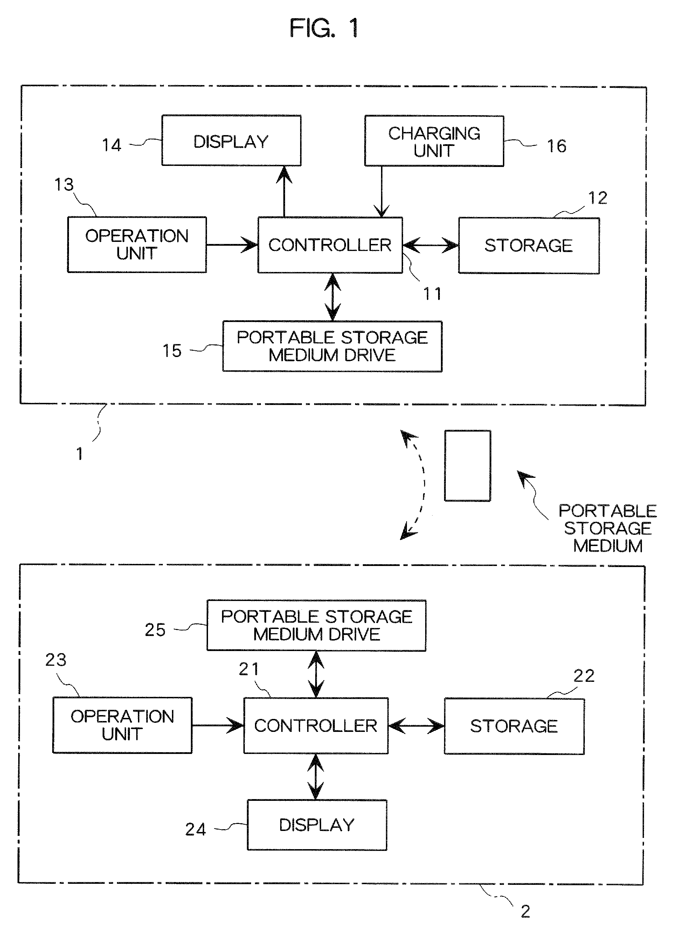

The following is a description with reference to the drawings of an embodiment of the present invention. As shown in FIG. 1, a game system of the embodiment of the invention comprises a first game device 1 and a second game device 2 that are provided separately from each other. The first game device 1 is comprised of a controller 11, storage 12, operation unit 13, display 14, portable storage medium drive 15, and charging unit 16, and the second game device 2 is comprised of a controller 21, storage 22, operation unit 23, display 24, and portable storage medium drive 25.

The first game device 1 may be a game device for commercial use located at gaming facilities such as a game center, and the second game device 2 may be a household game device. The display 24 of the second game device 2 may also be provided separately as a household television.

The controller 11 of the first game device 1 implements writing means of the present invention, and operates in accordance with a program stored in the storage 12 so as to process game events. The content of specific processing of the controller 11 is described later. The storage 12 stores a program executed by the controller 11. Further, the storage 12 also operates as working memory for storing data for the processing of the controller 11.

The operation unit 13 is a controller such as a joystick and buttons etc., and outputs content of player operations to the controller 11. The display 14 is a display etc., for displaying game screens in accordance with instructions inputted by the controller 11.

The portable storage medium drive 15 accommodates the portable storage medium, reads and outputs to the controller 11 information stored on the portable storage medium in response to the instruction input from the controller 11, and stores information inputted by the controller 11 in the portable storage medium. The portable storage medium may include those where information is recorded by changing physical properties of a medium surface such as re-writable cards, memory elements for storing data on built-in ICs such as Smart Media (trademark) etc., those recording information using invisible ink such as infra-red ink etc. on a paper surface, or those that record information magnetically and/or optically, such as portable hard disc devices, MOs, or CD-Rs, etc.

The charging unit 16 receives inserted money such as paper money or coins etc., identifies the amount, and outputs information indicating the identified amount to the controller 11.

The content of the processing of the controller 11 is now described. When information for the amount received is inputted from the charging unit 16, the controller 11 sums up this information and stores this information in the storage 12. Namely, when "200 yen" is currently stored as the amount received up until now in the storage 12, if information for an amount of "100 yen" is inputted from the charging unit 16, then this is totaled and information of "300 yen" is stored in the storage 12. The controller 11 then divides the amount shown in this information by pre-determined play units using information for the amount inputted by the charging unit 16, whereby the possible number of times to play is calculated as credit information.

When an instruction to start playing is received from the player, the controller 11 confirms whether or not the credit information is "1" or more. If the credit information is "1" or more, the credit information is decremented and the game processing begins. In this game processing, the controller 11 instructs reading of information for play content stored in the portable storage medium to the portable storage medium drive 15, and when information for play content read out from the portable storage medium by the portable storage medium drive 15 is inputted, game processing is carried out based on this information. When there is an instruction from the player to end the game or the game itself ends, the portable storage medium drive 15 is instructed to write the play content to the portable storage medium.

A feature of this embodiment is that the controller 11 does not only just write play content, but also writes information relating to play amount to the portable storage medium. Here, play amount is information indicating the extent to which the player has played the first game device 1. Specifically, the play amount is information indicated by a total charge the player has paid in order to play the first game device 1, the number of times the player has played the first game device 1, and the time for which the player has played the first device 1, etc.

Namely, the controller 11 instructs the portable storage medium drive 15 to read information relating to play amount from the portable storage medium, adds information for play amount for this time to information relating to play amount inputted from the portable storage medium drive 15, and instructs the portable storage medium drive 15 to write information for play amount after this addition to the portable storage medium.

For example, when the amount paid in order to play is taken to be the play amount, the controller 11 adds information for the amount summed up and stored at the storage 12 to information relating to the read play amount (the total up to this time) so as to generate new play amount information which is written to the portable storage medium.

Further, when the number of times played is taken as the play amount, when, for example, an instruction to start playing (this may also include to start playing again) is received from the player, if the credit information is "1" or more, the number of times played for this time during this time (the number of times played from the portable storage medium being accommodated in the portable storage medium drive 15 until the portable storage medium is removed) is incremented and stored in the storage 12. A total value for the number of times played on this occasion (the number of times played from the portable storage medium being accommodated in the portable storage medium drive 15 until the portable storage medium is removed) stored in the storage 12 is then added to information relating to the read-out play amount (total number of times up to this time) so as to generate new play amount information which is written to the portable storage medium.

When play time is used as the play amount, the controller 11, for example, activates a timer (not shown) at the time of starting game processing, with the time given by this timer when play ends (at the time of a play end instruction or when the game ends) being totaled and stored at the storage 12 as play time information. The total play time for this occasion is acquired, a total value for the play time on this occasion (the playing time from when the portable storage medium is accommodated in the portable storage medium drive 15 until the portable storage medium is removed) stored in the storage 12 is added to information relating to the read-out play amount (total time up until now) so as to create new play amount information, which is written to the portable storage medium.

A total number of game stages or total characters operated (number of characters operated) etc. may also be taken as the play amount.

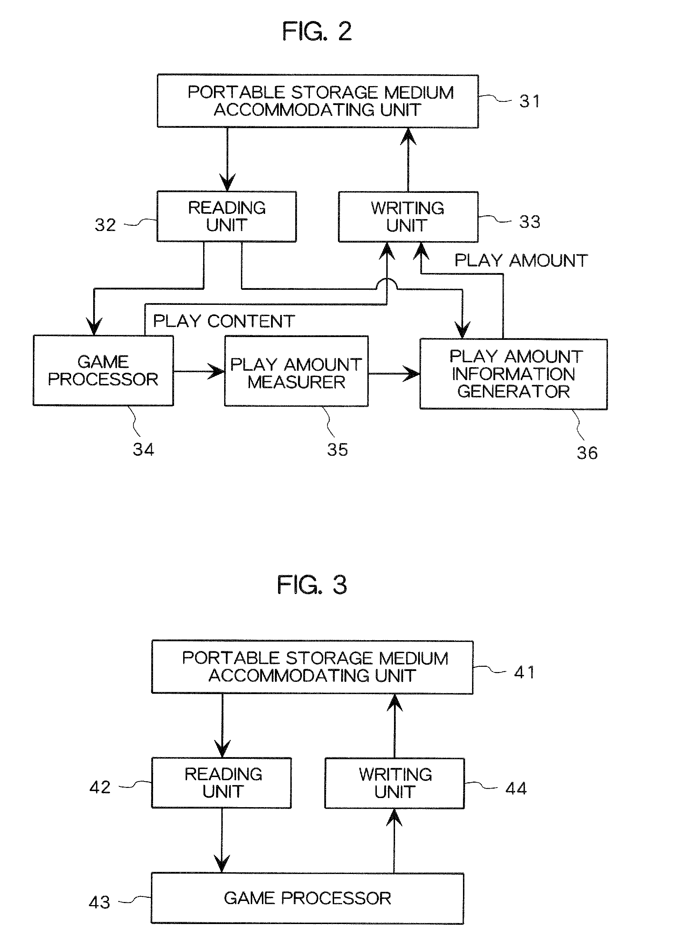

The first game device 1 of the embodiment has the above configuration, and if this content is expressed as a functional block view, this gives that shown in FIG. 2. Namely, the first game device 1 is comprised of a portable storage medium accommodating unit 31, a reading unit 32, a writing unit 33, a game processor 34, a play amount measurer 35, and a play amount information generator 36. The portable storage medium accommodating unit 31, reading unit 32, and writing unit 33 are realized by the portable storage medium drive 15. Further, the game processor 34, play amount measurer 35, and play amount information generator 36 are basically realized by the controller 11.

The portable storage medium accommodating unit 31 accommodates the portable storage medium. The reading unit 32 reads out information from the portable storage medium accommodated by the portable storage medium accommodating unit 31 and outputs this information to the game processor 34 and the play amount information generator 36. The writing unit 33 writes information inputted by the play amount information generator 36 to the portable storage medium accommodated by the portable storage medium accommodating unit 31.

The game processor 34 executes game processing in accordance with pre-determined programs. The play amount measurer 35 measures play amount (played from when the portable storage medium is accommodated by the portable storage medium accommodating unit 31 until the portable storage medium is removed) for playing on this occasion. Specifically, this play amount can be the total amount entered in order to play, the number of times played, or the time played (measured by a timer (not shown)). Further, the play amount measurer 35 outputs play amount information relating to playing on this occasion to the play amount information generator 36.

The play amount information generator 36 receives as input from the reading unit 32 play amount information (information for the play amount up until now) stored currently in the portable storage medium and receives as input from the play amount measurer 35 information for the play amount for this occasion. The play amount information generator 36 then adds these together to create new play amount information, and outputs this information to the writing unit 33. As a result, new play amount information is recorded on the portable storage medium. The play amount information generator 36 may also carry out this processing collectively when, for example, the user carries out an operation to remove the portable storage medium or when the play content is stored.

Next, a description is given of each part of the second game device 2. The controller 21 of the second game device 2 implements game processing means of the present invention, and operates in accordance with a program stored in the storage 22 so as to execute prescribed game processing. The content of specific processing of the controller 21 is described later. The storage 22 stores a program executed by the controller 21. Further, the storage 22 also operates as working memory for storing data for the processing of the controller 21.

The operation unit 23 is a game controller etc. such as a joystick and buttons etc., and outputs content of player operations to the controller 21. The display 24 is a display or household television etc., for displaying game screens in accordance with instructions inputted by the controller 21.

The portable storage medium drive 25 accommodates the portable storage medium, reads and outputs to the controller 21 information stored on the portable storage medium according to an instruction inputted by the controller 21, and stores information inputted by the controller 21 in the portable storage medium. This portable storage medium drive 25 realizes the medium accommodating means of the second game device of the present invention.

The content of the processing of the controller 21 is now described. The controller 21 starts game processing upon receiving an instruction from a player to start playing. In this game processing, the controller 21 instructs reading of information for play content stored in the portable storage medium to the portable storage medium drive 25, and when information for play content read out from the portable storage medium by the portable storage medium drive 25 is inputted, game processing is carried out based on this information When there is an instruction from the player to end the game or the game itself ends, the controller 21 instructs the portable storage medium drive 25 to write the play content to the portable storage medium.

It is a characteristic of this embodiment that the controller 21 instructs the portable storage medium drive 25 to read out not only play content from the portable storage medium but also information relating to play amount, with the content of game processing then being modified (changed) using read-out information relating to play amount.

An example of modifying content of game processing would be for the controller 21 to generate a special event in the game every time the play amount reaches predetermined values. For example, in the case of a game where the game content involves training a virtual pet while raising the virtual pet, this special event may be the appearance of choices for the type of pet that do not usually appear, or the appearance of game items that do not usually appear. Further, examples such as changing the degree of difficulty of the game can also be considered as further examples of modification to the content of the game processing.

The second game device 2 of the embodiment has the above configuration, and if this content is expressed as a functional block view, this gives that shown in FIG. 3. Namely, the second game device 2 is comprised of a portable storage medium accommodating unit 41, a reading unit 42, a game processor 43, and a writing unit 44. The portable storage medium accommodating unit 41, reading unit 42, and writing unit 44 are realized by the portable storage medium drive 25. Further, the game processor 43 is basically realized by the controller 21.

The portable storage medium accommodating unit 41 accommodates the portable storage medium. The reading unit 42 reads out information of play content and play amount from the portable storage medium accommodated by the portable storage medium accommodating unit 41 and outputs this information to the game processor 43. The game processor 43 implements game processing in accordance with a pre-determined program and, as described above, utilizes the play amount information inputted from the reading unit 42 to modify the content of the game processing. The writing unit 44 receives input of play content information from the game processor 43 and writes this information to the portable storage medium accommodated by the portable storage medium accommodating unit 41.

According to this embodiment, the content of game processing occurring in the second game device 2 is modified so that, for example, special events occur, according to play amount such as the fee, time, and number of times played at the first game device 1. As a result, incentives relating to play amount at the first game device are provided to the player.

Further, the present invention is by no means limited to the embodiment shown thus far. For example, in the description up to this point, a description is given taking a game parameter of the present invention exerting influence on the content of game processing at the second game device as play amount However, these game parameters may also be one or both of whether or not it is possible for a special game event to occur, or data utilized during the occurrence of a special game event.

For example, in the case of a game involving training and rearing a virtual pet, this may be information such as whether or not choices for a type of pet that do not usually appear are added, or whether or not game items appear that do not usually appear, or may be information such as data itself for a type of pet or game item data itself that does not usually appear (image data or various parameters).

In this case, at the first game device 1, it is also possible to decide whether or not a special event is actually made to occur using a random number in cases where a game amount exceeds a predetermined value or where prescribed special event generation conditions are fulfilled. According to this, it is not possible to know whether or not a special event will occur for certain even if the game amount exceeds the prescribed conditions, further improving the interest of the game.

It is also possible for this processing to decide whether or not a special event will actually occur using a random number based on when game parameters for causing a special event are inputted on the side of not the first game device 1 but the second game device 2. This also brings about the same results and the interest of the game is improved.

Moreover, in order to ensure that a special event that has occurred once does not occur again, it is also possible for the second game device 2 to make information specifying generated special events, and information pertaining to the number of times of this special event or whether or not the special event has been made to occur, correlate. This information may then be written to the portable storage medium as occurrence record information. Then, when a special event is made to occur, this occurrence record information is referred to, and in cases where a special event to be caused to occur has already occurred a pre-determined limited number of times, occurrence of the special event is cancelled. The number of times a special event occurs can therefore be suppressed, and interest in the game can be increased.

Further, in the description up to this point, the "play amount for this occasion" is calculated taking into consideration a player playing consecutively a plurality of times. However, it is also possible to add up and write the play amount each time the game is played.

### INDUSTRIAL APPLICABILITY

According to a game system of the present invention, when providing a game using computer, it is useful to provide an incentive to play a lot with a player, thus contributing to development of information industry.

## Claims

1. A game system comprising:
a first game device; and a second game device separate from the first game device,
wherein the first game device comprises:
medium accommodating means for accommodating a portable storage medium; and
writing means for generating information relating to a play amount for a player, and writing one or more game parameters for information relating to the play amount to the portable storage medium,
and the second game device comprises:
medium accommodating means for accommodating the portable storage medium; and
game processing means for reading the game parameters stored on the accommodated portable storage medium and processing prescribed game events based on the read game parameters.

2. The game system of claim 1, wherein
the information relating to the play amount is information containing at least one of:
a fee paid by the player for playing at the first game device;
a number of times a player has played at the first game device; and
time a player has played for at the first game device.

3. The game system of claim 1 or claim 2, wherein
the game parameters contain at least one of whether or not occurrence of the prescribed game event is possible, and data utilized during the occurrence of the prescribed game event; and
the second game device carries out processing to generate the prescribed game event based on the game parameters.

4. The game system of claim 3, wherein
at least one of the first game device and the second game device decides whether or not to generate the prescribed game event based on a random number.

5. The game system of claim 3 or claim 4, further comprising:
record writing means, when at least one of the first game device or the second game device generates the prescribed game event, writing a record of the occurrence containing information for identifying the prescribed game event to the portable storage medium,
wherein, when there is a record of the occurrence, processing is carried out to limit generation of the prescribed game event identified in information contained in the record of the occurrence.

6. A second game device capable of cooperation with a first game device including means for generating information relating to a play amount of a player and writing one or more game parameters for information relating to the play amount in a portable storage medium, comprising:
medium accommodating means for accommodating the portable storage medium; and
game processing means for reading the game parameters stored on the accommodated portable storage medium and processing prescribed game events based on the read game parameters.

7. A first game device comprising:
medium accommodating means for accommodating a portable storage medium; and
writing means for generating information relating to a play amount for a player, and writing the game parameters for information relating to the play amount to the portable storage medium.

8. A game providing method, employing a first game device and a second game device, comprising the steps of:
at the first game device, generating information relating to a play amount for a player, and writing one or more game parameters for information relating to the play amount to a portable storage medium, and
at the second game device, reading the game parameters stored on the portable storage medium and processing prescribed game events based on the read game parameters.

9. A program product capable of executing, on a computer built-into a second game device capable of cooperation with a first game device including means for generating information relating to a play amount of a player and writing one or more game parameters for information relating to the play amount in a portable storage medium, steps of:
reading out the game parameters stored on the portable storage medium; and
processing prescribed game events based on the read-out game parameters.

10. A program product for executing steps of:
generating information relating to play amount of a player; and
writing one or more game parameters for information relating to the play amount on the portable storage medium.

11. A computer-readable recording medium for storing a program capable of executing, on a computer built-into a second game device capable of cooperation with a first game device including means for generating information relating to a play amount of a player and writing one or more game parameters for information relating to the play amount in a portable storage medium, steps of:
reading out the game parameters stored on the portable storage medium; and
processing prescribed game events based on the read-out game parameters.

12. A computer-readable recording medium for storing a program for executing steps of:
generating information relating to play amount of a player; and
writing one or more game parameters for information relating to the play amount on the portable storage medium.
